# EUROPEAN PATENT APPLICATION

(11) **EP 4 682 810 A1**
(43) Date of publication of application: **21.01.2026**
(21) Application number: 24770204.6
(22) Date of filing: 22.01.2024
(51) Int. Cl.: G06Q 50/06

(54) **GAS RESIDUAL QUANTITY MANAGEMENT SYSTEM**

(30) Priority: 16.03.2023 JP 2023041836
(71) Applicant: Panasonic Intellectual Property Management Co., Ltd., Kadoma-shi, Osaka 571-0057 (JP)
(72) Inventor: YAMASHITA, Masumi, Osaka 571-0057 (JP); WATANABE, Takashi, Osaka 571-0057 (JP); SHIRASAWA, Tadanori, Osaka 571-0057 (JP); WATANABE, Kenichi, Osaka 571-0057 (JP)
(74) Representative: SSM Sandmair
(86) International application number: PCT/JP2024/001677
(87) International publication number: WO 2024/190082

(57) **Abstract**

A gas remaining amount management system includes: a flow rate measurer that measures a flow rate of a gas flowing to a gas appliance from a gas container located at a consumer's place or at each of a plurality of consumer's places; an indicator value calculator that calculates an indicator value indicating a gas consumption trend at the consumer's place; a determiner that determines as a reference period a period including past data to be referenced, based on a comparison between the indicator value and a threshold, the past data indicating past gas consumption; a remaining amount calculator that calculates a gas remaining amount in the gas container after a first predetermined period using the past data in the reference period; and an informer that informs of a replacement timing of the gas container based on the gas remaining amount.

## Description

### Technical Field

The present invention relates to a gas remaining amount management system that manages gas remaining amounts of respective consumer's places.

### Background Art

There has been a system that manages a gas remaining amount in a gas container. PTL 1 discloses a gas demand prediction system that calculates a rate of change of a gas use amount between a current meter reading date and a past meter reading date in the same period as the current meter reading date, based on a difference between respective pieces of meter indication data. In the case of calculating the rate of change between the meter reading date and the past meter reading date in the same period as the meter reading date, for example, if the current meter reading of a gas meter is conducted in February, the gas use amount per day in February last year and the gas use amount per day in March last year are used. In this case, a value obtained by "(gas use amount per day in March last year)/(gas use amount per day in February last year)" is used as the rate of change. Then, a value obtained by multiplying the most recent gas use amount by the rate of change is used as a changed gas use amount.

### Citation List

### Patent Literature

PTL 1: Japanese Laid-Open Patent Application Publication No. 2013-254414

### Summary of Invention

### Technical Problem

However, the rate of change used in the above conventional technology does not necessarily reflect the gas use trend of a consumer's place appropriately. Therefore, regarding the conventional technology, there is still room for improvement in managing the gas remaining amount with a higher degree of accuracy.

An object of the present invention is to provide a gas remaining amount management system that can manage a gas remaining amount in a gas container at a consumer's place with a high degree of accuracy.

### Solution to Problem

A gas remaining amount management system of the present invention includes: a flow rate measurer that measures a flow rate of a gas flowing to a gas appliance from a gas container located at a consumer's place or at each of a plurality of consumer's places; an indicator value calculator that calculates an indicator value indicating a gas consumption trend at the consumer's place; a determiner that determines as a reference period a period including past data to be referenced, based on a comparison between the indicator value and a threshold, the past data indicating past gas consumption; a remaining amount calculator that calculates a gas remaining amount in the gas container after a first predetermined period using the past data in the reference period; and an informer that informs of a replacement timing of the gas container based on the gas remaining amount.

According to the present invention, the period including the past data to be referenced is determined as the reference period by the determiner based on the comparison between the indicator value and the threshold. Then, based on the past data in the reference period, the remaining amount calculator calculates the gas remaining amount (i.e., the predicted value of the gas remaining amount) in the gas container after the first predetermined period. As above, the reference period that is the period including the past data to be referenced is not fixed but is appropriately changed and determined. For example, when the period including the past data to be referenced increases, the number of pieces of past data increases, and therefore, the trend of the gas consumption at the consumer's place is averaged out for a long period of time. As a result, in the predicted value of the gas remaining amount, it becomes difficult to capture the most recent change in the gas consumption at the consumer's place. In contrast, when the period including the past data to be referenced is reduced, and the gas remaining amount is then calculated, the occurrence of a sudden change in the gas consumption at the consumer's place affects the predicted value of the gas remaining amount. Therefore, the predicted value of the gas remaining amount does not become an appropriate value. However, in the present invention, the period including the past data to be referenced is determined as the reference period based on the comparison between the indicator value indicating the gas consumption trend and the threshold. Thus, when the indicator value is the threshold or more, the change in the consumption is regarded as large, and therefore, the gas remaining amount can be calculated based on, for example, the reference period that emphasizes the most recent consumption trend. When the indicator value is less than the threshold, the change in the consumption is regarded as small, and therefore, the gas remaining amount can be calculated based on the consumption trend in the reference period longer than the above reference period. Thus, the accuracy of the predicted value of the gas remaining amount increases, and therefore, the gas remaining amount in the gas container at the consumer's place can be managed with a high degree of accuracy.

In the above invention, the past data in the reference period may include most recent past data.

According to the above configuration, since the most recent past data is used as the past data, the gas consumption trend at the consumer's place in substantially real time can be reflected in the predicted value of the gas remaining amount.

In the above invention, the indicator value calculator may calculate as the indicator value an amount of change in the gas consumption in a past second predetermined period, and the determiner may determine as the reference period the second predetermined period including a largest amount of past data under a condition that the amount of change is less than the threshold when a length of the second predetermined period is changed.

According to the above configuration, the second predetermined period including the largest amount of past data under the condition that the amount of change in the gas consumption (standard deviation, for example) is less than the threshold is determined as the reference period. Therefore, the gas remaining amount can be calculated by emphasizing the consumption trend in the reference period that is as long as possible under the condition that the amount of change in the gas consumption is less than the threshold. Thus, the accuracy of the predicted value of the gas remaining amount increases.

In the above invention, the indicator value calculator may calculate a standard deviation as the amount of change.

According to the above configuration, the change in the gas consumption at the consumer's place can be easily captured.

In the above invention, the indicator value calculator may calculate as the indicator value a difference between an average value of the gas consumption in a past third predetermined period and an average value of the gas consumption in a past fourth predetermined period longer than the third predetermined period, and the determiner may determine as the reference period the fourth predetermined period including a largest amount of past data under a condition that the difference falls within a reference range as the threshold when a length of the fourth predetermined period is changed.

According to the above configuration, the fourth predetermined period including the largest amount of past data under the condition that the difference regarding the gas consumption falls within the reference range is determined as the reference period. Thus, the influence of the past data in which the above difference as the indicator value does not fall within the reference range can be reduced, and therefore, the accuracy of the predicted value of the gas remaining amount increases.

In the above invention, the indicator value calculator may calculate as the indicator value a ratio of a slope of the gas remaining amount in a past sixth predetermined period longer than a past fifth predetermined period to a slope of the gas remaining amount in the fifth predetermined period, and the determiner may determine as the reference period the sixth predetermined period including a largest amount of past data under a condition that the difference falls within a reference range as the threshold when a length of the sixth predetermined period is changed.

According to the above configuration, the sixth predetermined period including the largest amount of past data under the condition that the above ratio regarding the gas consumption falls within the reference range is determined as the reference period. Thus, the influence of the past data in which the above ratio as the indicator value does not fall within the reference range can be reduced, and therefore, the accuracy of the predicted value of the gas remaining amount increases.

### Advantageous Effects of Invention

The present invention can provide the gas remaining amount management system that can manage the gas remaining amount in the gas container at the consumer's place with a high degree of accuracy.

### Brief Description of Drawings

FIG. 1 is a block diagram showing a gas remaining amount management system according to one embodiment.
FIG. 2 is a block diagram showing the configurations of a consumer's place and a center server in the gas remaining amount management system of FIG. 1.
FIG. 3 is a diagram for explaining standard deviations that are indicator values in different cases.
FIG. 4 is a flowchart showing one example of the flow of steps performed by the gas remaining amount management system.
FIG. 5 is a diagram for explaining average values that are the indicator values.
FIG. 6 is a flowchart showing another example of the flow of steps performed by the gas remaining amount management system.
FIG. 7 is a diagram for explaining ratios (indicator values) of respective slopes of the gas remaining amounts in sixth predetermined periods to a slope of the gas remaining amount in a fifth predetermined period.
FIG. 8 is a flowchart showing another example of the flow of steps performed by the gas remaining amount management system.

### Description of Embodiments

Hereinafter, gas remaining amount management systems according to embodiments of the present invention will be described with reference to the drawings. Each gas remaining amount management system described below is merely one embodiment of the present invention. Therefore, the present invention is not limited to the following embodiments, and additions, deletions, and modifications may be made within the scope of the present invention.

### Embodiment 1

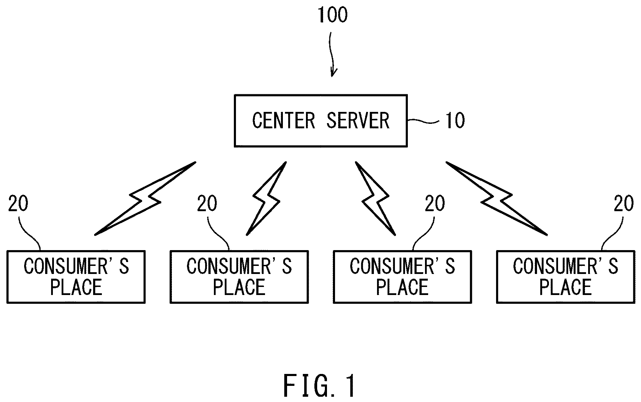

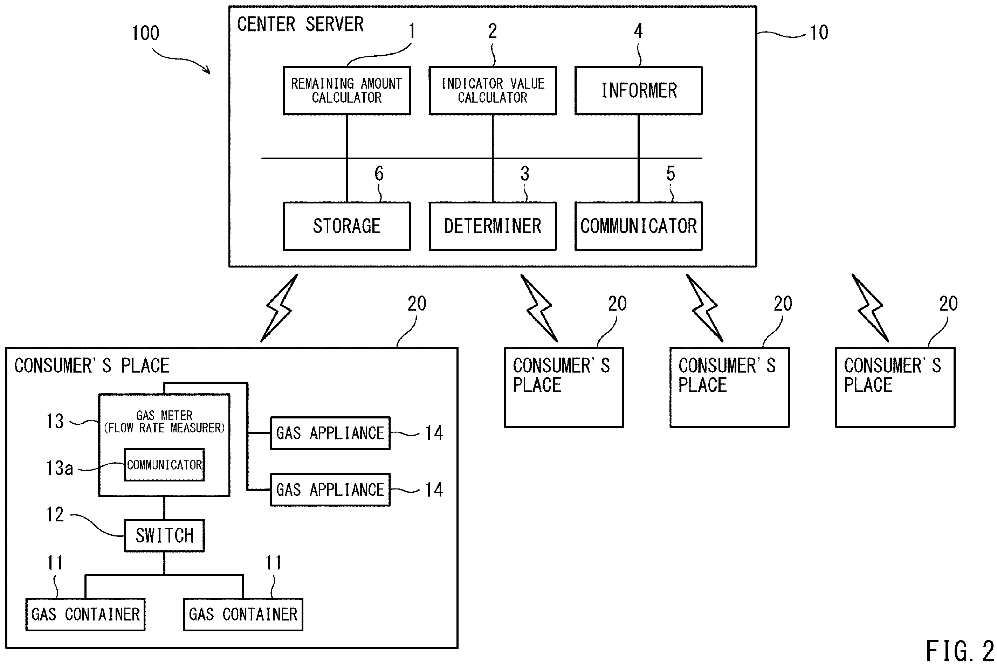

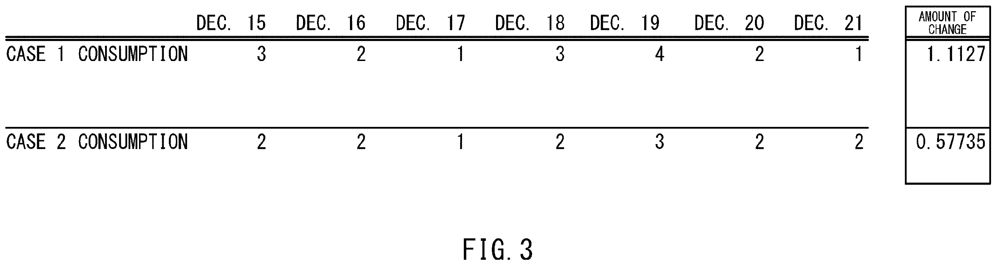

FIG. 1 is a block diagram showing a gas remaining amount management system 100 according to the present embodiment. FIG. 2 is a block diagram showing the detailed configurations of a consumer's place 20 and a center server 10 in the gas remaining amount management system 100 of FIG. 1. FIG. 3 is a diagram for explaining standard deviations that are indicator values in different cases.

As shown in FIG. 1, the gas remaining amount management system 100 includes the center server 10 and the consumer's places 20. FIG. 1 shows four consumer's places 20. However, in the gas remaining amount management system 100, the number of consumer's places 20 may be three or less or may be five or more.

As shown in FIG. 2, each consumer's place 20 includes two gas containers 11, a switch 12, a gas meter 13, and two gas appliances 14. The gas meter 13 corresponds to a flow rate measurer. Examples of the consumer's place 20 include a hospital, a school, a municipality facility, a nursing facility, an ordinary home, and a commercial facility. However, the consumer's place is not limited to these and may be a building that may use gas.

The gas container 11 is also called a gas bomb and is filled with gas, such as LP gas (liquefied petroleum gas). Hereinafter, the LP gas is simply referred to as gas. The switch 12 switches a gas supply passage such that the gas in one of the two gas containers 11 is supplied to the consumer's place 20. Thus, even when the gas in one of the two gas containers 11 runs out, the gas in the other gas container 11 may be supplied to the gas appliance 14.

Such gas run-out can be defined as below. In the present embodiment, that the switch 12 switches the gas container 11 that is used means that the gas container 11 that has been used until this switching is in a gas run-out state. In this case, the switch 12 detects a change in pressure applied in the gas container 11 and switches the gas container 11. Specifically, the gas container 11 is filled with the gas under pressure. When the gas runs out, the pressure decreases. The switch 12 detects a change in the pressure and switches the gas container 11 at a timing at which the pressure has decreased to a predetermined value. Therefore, the decreasing of the pressure, detected by the switch 12, to the predetermined value can be regarded as the gas run-out. Moreover, the gas run-out includes a case where the gas container 11 is manually switched when the gas appliance 14 cannot be used due to the pressure decrease. Furthermore, the gas run-out includes a case where instead of the pressure, for example, a remaining amount obtained by subtracting a used gas amount from an assumed gas volume is zero or a value close to zero. These definitions are applied to the gas run-out of the two gas containers 11.

The gas meter 13 measures the flow rate of the gas flowing from the gas container 11 to the gas appliance 14 in the consumer's place 20. When the gas meter 13 detects an abnormality, the gas meter 13 may execute a measure, such as blocking of the gas supply passage by a blocker.

The gas meter 13 includes a communicator 13a. The communicator 13a has a function of wirelessly communicating with a communicator 5 in the center server 10. A communication network, such as the Internet, a LAN, a LPWA (Low Power Wide Area), or WI-SUN can be used as a wireless communication system between the communicator 13a and the communicator 5 of the center server 10. The communicator 13a periodically (once a day, for example) transmits information regarding a gas use amount of the consumer's place 20 to the communicator 5 of the center server 10 together with date information regarding use or non-use (i.e., the use amount is zero), an ID that specifies the consumer's place 20, and location area information of the consumer's place 20. The communicator 13a does not have to be located in the gas meter 13 and may be located separately from the gas meter 13.

The gas appliance 14 is, for example, a gas stove, a gas water heater, a gas fan heater, or the like. However, the gas container 14 is not limited to these and may be equipment that consumes gas.

The center server 10 includes a remaining amount calculator 1, an indicator value calculator 2, a determiner 3, an informer 4, the communicator 5, and a storage 6. The remaining amount calculator 1, the indicator value calculator 2, the determiner 3, and the informer 4 among the above components of the center server 10 are functionally realized by: a microcontroller including a CPU (Central Processing Unit) and a memory (a ROM (Read Only Memory) and a RAM (Random Access Memory)) storing a program; an ASIC (Application Specific Integrated Circuit); or the like. Examples of the storage 6 include various memories and a hard disk. The center server 10 may be configured by a cloud system.

The remaining amount calculator 1 periodically (once a day, for example) receives a measurement result of the gas use amount which is transmitted from the communicator 13a of the gas meter 13 of each consumer's place 20 through the communicator 5. The remaining amount calculator 1 calculates the current gas remaining amount of the gas container 11 from the measurement result, for example, once a day based on gas container installation information given to each consumer's place 20. In this case, the remaining amount calculator 1 can obtain the gas remaining amount by subtracting the above gas use amount from an initial gas amount in the gas container 11 which is prestored in the storage 6. The gas container installation information is information necessary when calculating the gas remaining amount based on the measurement result of the gas use amount by the gas meter 13, and is information indicating the number of consumer's places 20 associated with one gas container 11. In FIG. 2, the number of consumer's places 20 associated with one gas container 11 is one. Therefore, the gas container installation information indicates one. On the other hand, in the case of, for example, an apartment building including the consumer's places 20, the gas meters 13 are provided for the respective consumer's places 20, and the gas containers 11 are collected at one place. To be specific, the number of gas containers 11 associated with the consumer's places 20 is one. Therefore, for example, when the number of consumer's places 20 is four, the gas container installation information indicates four. The gas container installation information may include the number of gas containers 11 located upstream of the switch 12 in the consumer's place 20.

Moreover, using past data in a below-described reference period among past data indicating past gas consumption of the consumer's place 20, the remaining amount calculator 1 calculates, as a predicted value, the gas remaining amount in the gas container 11 after a first predetermined period (after seven days, for example). Specifically, using all or part of the past data in the above reference period, the remaining amount calculator 1 calculates a slope of the gas consumption. More specifically, the remaining amount calculator 1 may calculate the slope of the gas consumption by, for example, the method of least squares using all of the past data or may calculate the slope between two points of the gas consumption using two pieces of past data. Using the slope calculated as above, the gas consumption after the first predetermined period from the current time can be calculated. Then, the remaining amount calculator 1 converts the gas consumption as the calculation result into the predicted value of the gas remaining amount. Specifically, the remaining amount calculator 1 obtains the predicted value of the gas remaining amount by subtracting the gas consumption as the calculation result from the initial gas amount. The predicted value of the gas remaining amount is stored in the storage 6. The number of days included in the above first predetermined period may be suitably set in accordance with, for example, the number of days required for an operator to replace the gas container 11.

The remaining amount calculator 1 may use a vaporization rate when calculating the gas remaining amount. In this case, the remaining amount calculator 1 calculates the gas remaining amount by using the vaporization rate corresponding to a location area of the consumer's place 20 corresponding to the gas meter 13 that transmits the measurement result or the vaporization rate corresponding to a date on which the measurement result is obtained by the gas meter 13.

The indicator value calculator 2 calculates an indicator value indicating a gas consumption trend at the consumer's place 20. The indicator value is not especially limited as long as it is a value indicating the gas consumption trend at the consumer's place 20. Specific examples of the above indicator value include: a standard deviation that is an amount of change in the gas consumption in a certain period; an average value of the gas consumption in a certain period; a variance value indicating how much the gas consumption in a certain period deviates from its average value; and a difference between a maximum value of the gas consumption and a minimum value of the gas consumption in a certain period. The processing performed by the indicator value calculator 2 will be described later in detail.

Based on the comparison between the indicator value calculated by the indicator value calculator 2 and a threshold prestored in the storage 6, the determiner 3 determines as the reference period a period including the past data to be referenced, the past data indicating the past gas consumption. In this case, the determiner 3 determines a period, such as three days or seven days, as the reference period including the past data to be referenced by the remaining amount calculator 1 when calculating the predicted value of the gas remaining amount. Thus, when the reference period determined by the determiner 3 is, for example, three days, the remaining amount calculator 1 calculates the predicted value of the gas remaining amount using the past data for three days. Moreover, when the reference period is, for example, seven days, the remaining amount calculator 1 calculates the predicted value of the gas remaining amount using the past data for seven days. In the present embodiment, the past data in the reference period may include the most recent past data. The most recent past data is the past data related to the latest gas consumption which has been transmitted from the consumer's place 20.

The informer 4 controls a display, an audio device, or the like to inform of warning. The informer 4 informs of a replacement timing of the gas container based on the gas remaining amount calculated by the remaining amount calculator 1. Specifically, the informer 4 compares the gas remaining amount calculated by the remaining amount calculator 1 (i.e., the predicted value of the gas remaining amount after the first predetermined period) with a threshold. When the gas remaining amount is less than the threshold, the informer 4 informs the operator, who replaces the gas container 11, of the warning that urges the operator to replace the gas container 11. A method of informing of this warning may be the distribution of a mail to the operator. The threshold may be a value when the gas remaining amount in the gas container 11 is, for example, 50% of the volume of the gas container 11. In this case, when the gas remaining amount is less than the threshold, the informer 4 determines that the replacement timing has been reached, and therefore, informs of the warning. When the gas remaining amount is the threshold or more, the informer 4 determines that the replacement timing has not been reached, and therefore, does not inform of the warning. It should be noted that the above "50%" may be 50% of the total of the volumes of the gas containers 11 of each consumer's place 20 (i.e., the sum of the volumes of the gas containers 11 of each consumer's place 20) or may be 50% of the volume of any one of the gas containers 11. The above informing may be performed by a method of: creating a list of the consumer's places 20 in each of which the gas remaining amount is smaller than the threshold; and transmitting this list to the operator once a day, for example.

The storage 6 stores the information of the gas use amount of the consumer's place 20, which has been received from the communicator 13a through the communicator 5, together with the date information regarding use or non-use (i.e., the use amount is zero), the ID that specifies the consumer's place 20, and the location area information of the consumer's place 20. Moreover, the storage 6 stores the respective thresholds, the information regarding the gas remaining amount calculated by the remaining amount calculator 1, and the like.

Hereinafter, the processing performed by the indicator value calculator 2 and the processing performed by the determiner 3 in the present embodiment will be described using specific examples.

The indicator value calculator 2 acquires from the storage 6 the past data that is the gas consumption in a second predetermined period, and calculates, for example, a standard deviation as the indicator value using this past data. In this case, the indicator value calculator 2 changes the length of the second predetermined period. When changing the length of the second predetermined period, the indicator value calculator 2 changes an end point of the second predetermined period without changing a past reference start point of the second predetermined period. Changing the length of the period by the indicator value calculator 2 is similarly performed in Embodiments 2 and 3 below. In FIG. 3, Case 1 shows an example of the past data in which the standard deviation in the second predetermined period (seven days, for example) is one or more, and Case 2 shows an example of the past data in which the standard deviation in the same period is less than one. In FIG. 3, the gas consumption is shown by simple numerical values for the respective days.

The determiner 3 determines as the reference period the second predetermined period including the largest amount of past data under the condition that the standard deviation is less than the threshold when the length of the second predetermined period has been changed. In this case, the determiner 3 determines whether or not the standard deviations in the second predetermined periods calculated by the indicator value calculator 2 are less than the threshold (one, for example). Then, the determiner 3 determines as the reference period the second predetermined period including the largest amount of past data among one or a plurality of second predetermined periods in each of which the standard deviation is less than the threshold. In Case 1 shown in FIG. 3, since the standard deviation for seven days is not less than the threshold, the determiner 3 determines as the reference period the the previous second predetermined period (i.e., a period shorter than seven days) in which the standard deviation is less than the threshold. On the other hand, in Case 2 shown in FIG. 3, the standard deviation for seven days is less than the threshold. Therefore, when the period that is seven days is a period including the largest amount of past data based on the premise that the standard deviation is less than the threshold, the determiner 3 determines seven days as the reference period. When the period that is seven days is not the period including the largest amount of past data based on the premise that the standard deviation is less than the threshold, the determiner 3 determines as the reference period a period which is longer than seven days and includes the largest amount of past data based on the premise that the standard deviation is less than the threshold. Based on the reference period determined as above, the remaining amount calculator 1 calculates the predicted value of the gas remaining amount after the first predetermined period. When the standard deviation for seven days is not less than the threshold, the determiner 3 determines as the reference period the period (i.e., a period shorter than seven days) in which the standard deviation is less than the threshold, as the previous second predetermined period, but the present embodiment is not limited to this. When the standard deviation is not less than the threshold, the determiner 3 may determine a predetermined number of days (three days, for example) as the reference period.

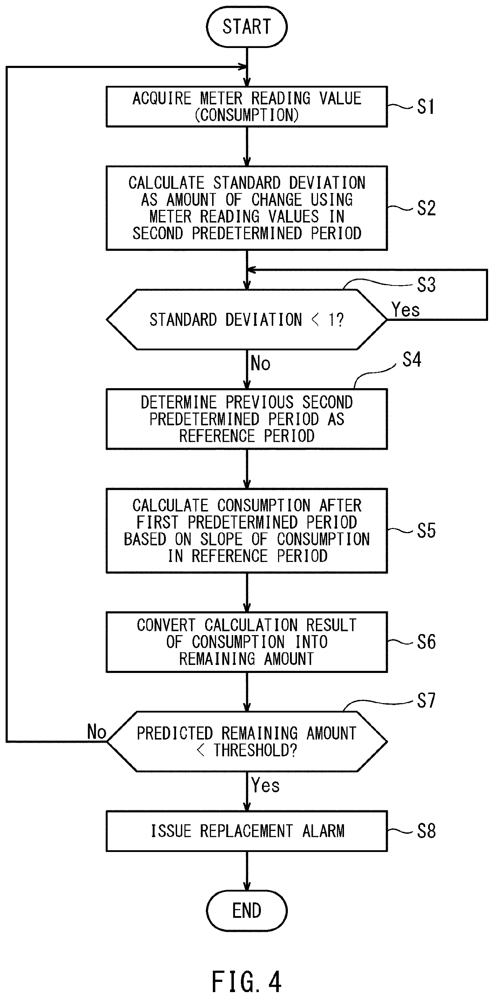

FIG. 4 is a flowchart showing one example of the flow of steps performed by the gas remaining amount management system 100. As shown in FIG. 4, first, the indicator value calculator 2 acquires from the storage 6 as a meter reading value the past data that is the gas consumption in the second predetermined period (Step S1). Then, using the past data acquired as above, the indicator value calculator 2 calculates the standard deviation as the indicator value (Step S2).

Next, the determiner 3 compares the standard deviation in the second predetermined period calculated by the indicator value calculator 2 with the threshold (Step S3). When the standard deviation is less than the threshold (Yes in Step S3), the determiner 3 increases the length of the second predetermined period and repeats Step S3. In contrast, when the standard deviation is the threshold or more (No in Step S3), the determiner 3 determines as the reference period the immediately preceding second predetermined period including the largest amount of past data under the condition that the standard deviation is less than the threshold (Step S4).

Using the past data in the reference period determined by the determiner 3, the remaining amount calculator 1 calculates the slope of the gas consumption. Based on the slope calculated as above, the remaining amount calculator 1 calculates the gas consumption after the first predetermined period from the current time (Step S5). Then, the remaining amount calculator 1 converts the gas consumption as the calculation result into the predicted value of the gas remaining amount (Step S6).

Next, the informer 4 compares the predicted value of the gas remaining amount calculated by the remaining amount calculator 1 with the threshold. When the gas remaining amount is less than the threshold (Yes in Step S7), the informer 4 informs the operator, who replaces the gas container 11, of the warning that urges the operator to replace the gas container 11 (Step S8). In contrast, when the gas remaining amount is the threshold or more (No in Step S7), the indicator value calculator 2 repeats Step S1 and the subsequent steps.

As described above, according to the gas remaining amount management system 100 of the present embodiment, the period including the past data to be referenced is determined as the reference period by the determiner 3 based on the comparison between the indicator value and the threshold. Then, based on the past data in the reference period, the remaining amount calculator 1 calculates the predicted value of the gas remaining amount in the gas container after the first predetermined period. As above, when calculating the gas remaining amount, the reference period that is the period including the past data to be referenced is not fixed but is appropriately changed and determined. For example, when the period including the past data to be referenced increases, the number of pieces of past data increases, and therefore, the trend of the gas consumption at the consumer's place 20 is averaged out for a long period of time. As a result, in the predicted value of the gas remaining amount, it becomes difficult to capture the most recent change in the gas consumption at the consumer's place 20. In contrast, when the period including the past data to be referenced is reduced, and the gas remaining amount is then calculated, the occurrence of a sudden change in the gas consumption at the consumer's place 20 affects the predicted value of the gas remaining amount. Therefore, the predicted value of the gas remaining amount does not become an appropriate value. However, in the present embodiment, the period including the past data to be referenced is determined as the reference period based on the comparison between the indicator value indicating the gas consumption trend and the threshold. Thus, when the indicator value is the threshold or more, the change in the consumption is regarded as large, and therefore, the gas remaining amount can be calculated based on, for example, the reference period that emphasizes the most recent consumption trend. When the indicator value is less than the threshold, the change in the consumption is regarded as small, and therefore, the gas remaining amount can be calculated based on the consumption trend in the reference period longer than the above reference period. Thus, the accuracy of the predicted value of the gas remaining amount increases, and therefore, the gas remaining amount in the gas container 11 at the consumer's place 20 can be managed with a high degree of accuracy.

### Embodiment 2

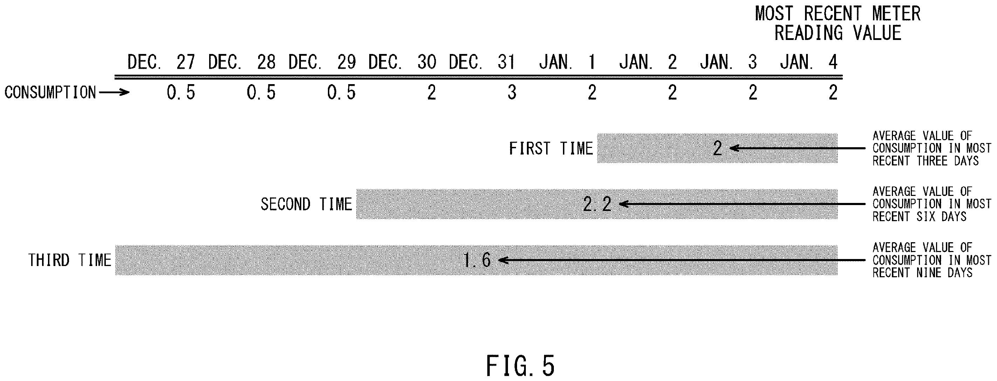

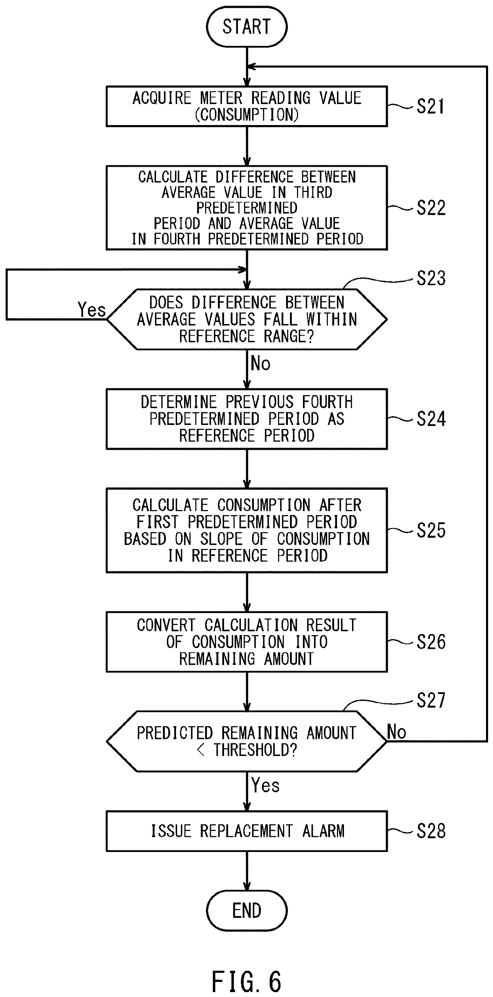

Next, Embodiment 2 will be described. FIG. 5 is a diagram for explaining average values that are the indicator values. FIG. 6 is a flowchart showing the flow of steps performed by the gas remaining amount management system 100 of the present embodiment. In FIG. 6, the gas consumption is shown by simple numerical values for the respective days.

In Embodiment 2, the indicator value calculator 2 calculates, as the indicator value, a difference between the average value of the gas consumption in a past third predetermined period and the average value of the gas consumption in each of one or a plurality of past fourth predetermined periods each of which is longer than the third predetermined period. The determiner 3 determines as the reference period the fourth predetermined period including the largest amount of past data under the condition that the above difference falls within a reference range as the threshold when the length of the fourth predetermined period is changed. A specific explanation is as follows.

Using the past data for, for example, the most recent three days as the third predetermined period, the indicator value calculator 2 calculates the average value of the gas consumption in the third predetermined period. In the example of FIG. 5, the average value of the gas consumption in the third predetermined period is 2.0. Next, using the past data in the fourth predetermined period (the most recent six days, for example) longer than the third predetermined period, the indicator value calculator 2 calculates the average value of the gas consumption in the fourth predetermined period. In the example of FIG. 5, the average value of the gas consumption is 2.2. Next, the indicator value calculator 2 increases the fourth predetermined period to, for example, the most recent nine days longer than the most recent six days. Using the past data for the most recent nine days, the indicator value calculator 2 calculates the average value of the gas consumption in the fourth predetermined period. In the example of FIG. 5, the average value of the gas consumption is 1.6. The past data in the fourth predetermined period includes the past data from the most recent one day to (2 + 3 × n [n: natural number]).

Next, the indicator value calculator 2 calculates the difference between the average value of the gas consumption in the third predetermined period and the average value of the gas consumption in the fourth predetermined period (six days). In the example of FIG. 5, the difference is 0.2 (= 2.2 - 2.0). Moreover, the indicator value calculator 2 changes the length of the fourth predetermined period from six days to nine days and calculates the difference between the average value of the gas consumption in the third predetermined period and the average value of the gas consumption in the fourth predetermined period (nine days). In the example of FIG. 5, the difference is -0.4 (= 1.6 - 2.0).

The determiner 3 compares each of the differences calculated by the indicator value calculator 2 with the threshold prestored in the storage 6. In this case, the determiner 3 determines whether or not each of the differences falls within the reference range (±0.3, for example) as the threshold. In the example of FIG. 5, the difference between the average value of the gas consumption in the third predetermined period and the average value of the gas consumption in the fourth predetermined period (six days) falls within the reference range, but the difference between the average value of the gas consumption in the third predetermined period and the average value of the gas consumption in the fourth predetermined period (nine days) does not fall within the reference range. Therefore, the determiner 3 determines, as the reference period, six days including the largest amount of past data under the condition that the difference falls within the reference range.

FIG. 6 is a flowchart showing the flow of steps performed by the gas remaining amount management system 100 of the present embodiment. As shown in FIG. 6, first, the indicator value calculator 2 acquires the past data that is the gas consumption from the storage 6 as the meter reading value (Step S21). Then, the indicator value calculator 2 calculates the average value of the gas consumption in the third predetermined period and the average values of the gas consumption in the respective fourth predetermined periods and calculates the differences between the average value of the gas consumption in the third predetermined period and the average values of the gas consumption in the respective fourth predetermined periods (Step S22).

Next, the determiner 3 determines whether or not each of the differences falls within the reference range (Step S23). When the above difference falls within the reference range (Yes in Step S23), the determiner 3 increases the length of the fourth predetermined period and repeats Step S23. In contrast, when the above difference does not fall within the reference range (No in Step S23), the determiner 3 determines as the reference period the immediately preceding fourth predetermined period including the largest amount of past data under the condition that the above difference falls within the reference range (Step S24).

Using the past data in the reference period determined by the determiner 3, the remaining amount calculator 1 calculates the slope of the gas consumption. Then, based on the slope calculated as above, the remaining amount calculator 1 calculates the gas consumption after the first predetermined period from the current time (Step S25). Then, the remaining amount calculator 1 converts the gas consumption as the calculation result into the predicted value of the gas remaining amount (Step S26).

Next, the informer 4 compares the predicted value of the gas remaining amount calculated by the remaining amount calculator 1 with the threshold. When the gas remaining amount is less than the threshold (Yes in Step S27), the informer 4 informs the operator, who replaces the gas container 11, of the warning that urges the operator to replace the gas container 11 (Step S28). In contrast, when the gas remaining amount is the threshold or more (No in Step S27), the indicator value calculator 2 repeats Step S21 and the subsequent steps.

As described above, according to the present embodiment, as with Embodiment 1, the period including the past data to be referenced is determined as the reference period based on the comparison between the indicator value indicating the gas consumption trend and the threshold. Thus, when the indicator value is the threshold or more, the change in the consumption is regarded as large, and therefore, the gas remaining amount can be calculated based on, for example, the reference period that emphasizes the most recent consumption trend. When the indicator value is less than the threshold, the change in the consumption is regarded as small, and therefore, the gas remaining amount can be calculated based on the consumption trend in the reference period longer than the above reference period. Thus, the accuracy of the predicted value of the gas remaining amount increases, and therefore, the gas remaining amount in the gas container 11 at the consumer's place 20 can be managed with a high degree of accuracy.

### Embodiment 3

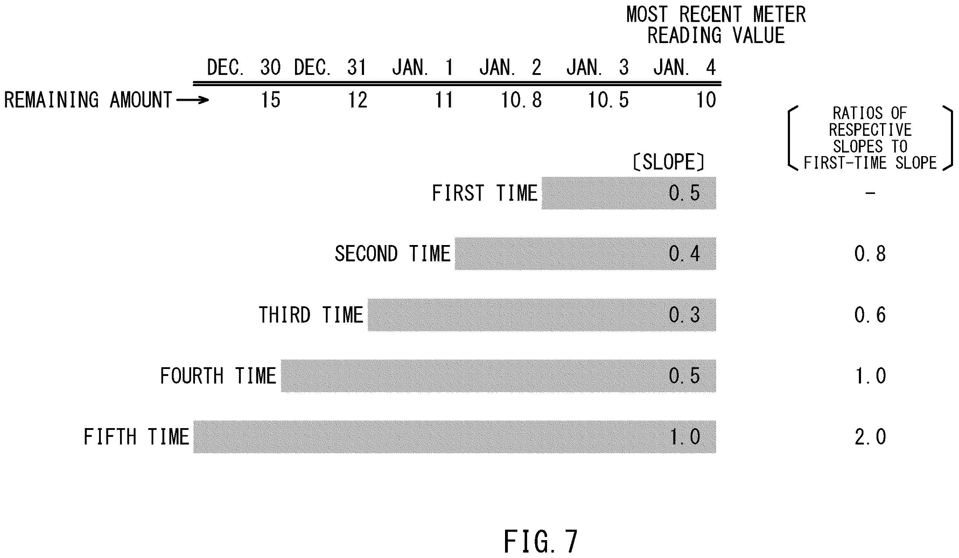

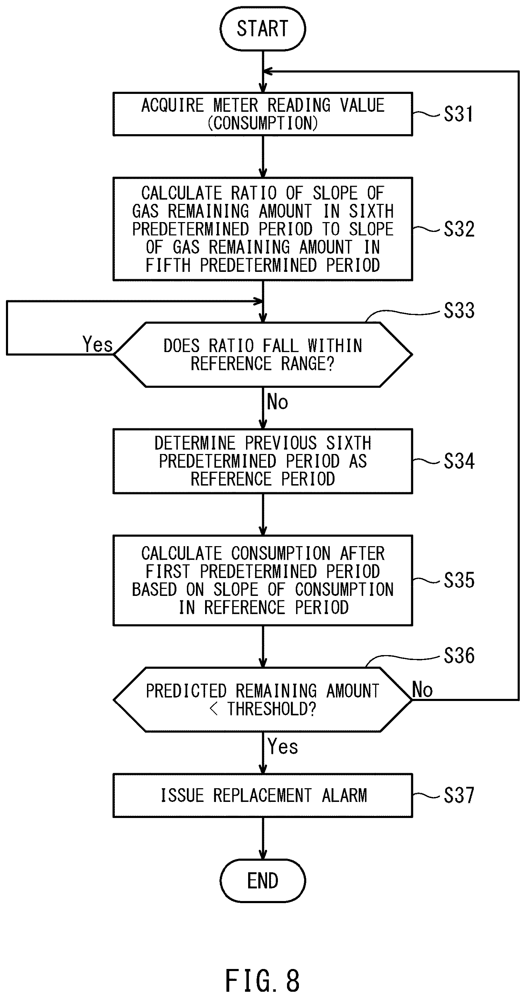

Next, Embodiment 3 will be described. FIG. 7 is a diagram for explaining ratios of the slopes of the gas remaining amounts in sixth predetermined periods to the slope of the gas remaining amount in a fifth predetermined period. FIG. 8 is a flowchart showing the flow of steps performed by the gas remaining amount management system 100 of the present embodiment. In FIG. 7, the gas remaining amount is shown by simple numerical values for the respective days.

In Embodiment 3, the indicator value calculator 2 calculates, as the indicator value, a ratio of the slope of the gas remaining amount in each of one or a plurality of sixth predetermined periods, each of which is longer than the fifth predetermined period, to the slope of the gas remaining amount in the fifth predetermined period. The determiner 3 determines as the reference period the sixth predetermined period including the largest amount of past data under the condition that the above ratio falls within the reference range as the threshold when the length of the sixth predetermined period is changed. A specific explanation is as follows.

Using the past data for, for example, the most recent two days as the fifth predetermined period, the indicator value calculator 2 calculates the slope of the gas remaining amount in the fifth predetermined period. In the example of FIG. 7, the slope of the gas remaining amount in the fifth predetermined period is 0.5 (= (10.5 - 10)/1). Next, using the past data in the sixth predetermined period (the most recent three days, for example) longer than the fifth predetermined period, the indicator value calculator 2 calculates the slope of the gas remaining amount in the sixth predetermined period. In the example of FIG. 7, the slope of the gas remaining amount in the sixth predetermined period is 0.4 (= (10.8 - 10)/2). Next, as the indicator value, the indicator value calculator 2 calculates a ratio of the slope of the gas remaining amount in the sixth predetermined period to the slope of the gas remaining amount in the fifth predetermined period. In the example of FIG. 7, the ratio is 0.8 (= 0.4/0.5).

Next, the indicator value calculator 2 increases the sixth predetermined period to periods, such as the most recent four days, the most recent five days, and the most recent six days, longer than the most recent three days, and calculates the ratios in the same manner as above. In the example of FIG. 7, the ratios are 0.6 (= 0.3/0.5), 1.0 (= 0.5/0.5), and 2.0 (= 1.0/0.5).

The determiner 3 compares the above ratio calculated by the indicator value calculator 2 with the threshold prestored in the storage 6. In this case, the determiner 3 determines whether or not the above ratio falls within the reference range (0.5 or more and 1.5 or less, for example) as the threshold. In the example of FIG. 7, when the sixth predetermined period is three days, four days, and five days, the above ratios fall within the reference range. However, when the sixth predetermined period is six days, the above ratio does not fall within the reference range. Therefore, as the reference period, the determiner 3 determines the above five days including the largest amount of past data under the condition that the ratio falls within the reference range.

FIG. 8 is a flowchart showing the flow of steps performed by the gas remaining amount management system 100 of the present embodiment. As shown in FIG. 8, first, the indicator value calculator 2 acquires as the meter reading value the past data that is the gas consumption from the storage 6 (Step S31). Then, the indicator value calculator 2 calculates the ratios of the slopes of the gas remaining amounts in the sixth predetermined periods to the slope of the gas remaining amount in the fifth predetermined period (Step S32).

Next, the determiner 3 determines whether or not the above ratios fall within the reference range (Step S33). When the above ratio falls within the reference range (Yes in Step S33), the determiner 3 increases the length of the sixth predetermined period and repeats Step S33. In contrast, when the above ratio does not fall within the reference range (No in Step S33), the determiner 3 determines as the reference period the immediately preceding sixth predetermined period including the largest amount of past data under the condition that the above ratio falls within the reference range (Step S34).

The remaining amount calculator 1 calculates the slope of the gas remaining amount using the past data in the reference period determined by the determiner 3. Then, based on the slope calculated as above, the remaining amount calculator 1 calculates the gas remaining amount after the first predetermined period from the current time (Step S35).

Next, the informer 4 compares the predicted value of the gas remaining amount calculated by the remaining amount calculator 1 with the threshold. When the gas remaining amount is less than the threshold (Yes in Step S36), the informer 4 informs the operator, who replaces the gas container 11, of the warning that urges the operator to replace the gas container 11 (Step S37). In contrast, when the gas remaining amount is the threshold or more (No in Step S36), the indicator value calculator 2 repeats Step S31 and the subsequent steps.

As described above, according to the present embodiment, as with Embodiment 1, the period including the past data to be referenced is determined as the reference period based on the comparison between the indicator value indicating the gas consumption trend and the threshold. Thus, when the indicator value is the threshold or more, the change in the consumption is regarded as large, and therefore, the gas remaining amount can be calculated based on, for example, the reference period that emphasizes the most recent consumption trend. When the indicator value is less than the threshold, the change in the consumption is regarded as small, and therefore, the gas remaining amount can be calculated based on the consumption trend in the reference period longer than the above reference period. Thus, the accuracy of the predicted value of the gas remaining amount increases, and therefore, the gas remaining amount in the gas container 11 at the consumer's place 20 can be managed with a high degree of accuracy.

### Modified Example

The present invention is not limited to the above embodiments, and various modifications may be made within the scope of the present invention. Examples are as follows.

In the above embodiments, the remaining amount calculator 1 calculates the predicted value of the gas remaining amount using the slope of the gas consumption or the slope of the gas remaining amount. However, the above embodiments are not limited to this, and the predicted value of the gas remaining amount may be calculated by machine learning performed by artificial intelligence.

Moreover, in the above embodiments, the gas remaining amount management system 100 is described as a technical concept including the gas meter 13 and the center server 10. However, the above embodiments are not limited to this. The gas remaining amount management system 100 may be a system provided at the gas meter 13.

Moreover, in the above embodiments, the remaining amount calculator 1, the indicator value calculator 2, the determiner 3, and the informer 4 are located at the center server 10. However, the above embodiments are not limited to this. The remaining amount calculator 1, the indicator value calculator 2, the determiner 3, and the informer 4 may be located at the gas meter 13, and the center server 10 may have a function of outputting informing contents.

Moreover, each of the above embodiments has described an example in which each consumer's place 20 includes two gas containers 11 and two gas appliances 14. However, the above embodiments are not limited to this. The number of gas containers 11 may be one or may be three or more, and the number of gas appliances 14 may be one or may be three or more.

Furthermore, in the above embodiments, the gas container 11 is filled with the LP gas (liquefied petroleum gas) as one example of the gas. However, the above embodiments are not limited to this. The gas container 11 may be filled with another gas, such as oxygen.

### Reference Signs List

- 1: remaining amount calculator
- 2: indicator value calculator
- 3: determiner
- 4: informer
- 5: communicator
- 6: storage
- 10: center server
- 11: gas container
- 13: gas meter
- 13a: communicator
- 14: gas appliance
- 20: consumer's place
- 100: gas remaining amount management system

## Claims

1. A gas remaining amount management system comprising:
a flow rate measurer that measures a flow rate of a gas flowing to a gas appliance from a gas container located at a consumer's place or at each of a plurality of consumer's places;
an indicator value calculator that calculates an indicator value indicating a gas consumption trend at the consumer's place;
a determiner that determines as a reference period a period including past data to be referenced, based on a comparison between the indicator value and a threshold, the past data indicating past gas consumption;
a remaining amount calculator that calculates a gas remaining amount in the gas container after a first predetermined period using the past data in the reference period; and
an informer that informs of a replacement timing of the gas container based on the gas remaining amount.

2. The gas remaining amount management system according to claim 1, wherein the past data in the reference period includes most recent past data.

3. The gas remaining amount management system according to claim 1, wherein:
the indicator value calculator calculates as the indicator value an amount of change in the gas consumption in a past second predetermined period; and
the determiner determines as the reference period the second predetermined period including a largest amount of past data under a condition that the amount of change is less than the threshold when a length of the second predetermined period is changed.

4. The gas remaining amount management system according to claim 3, wherein the indicator value calculator calculates a standard deviation as the amount of change.

5. The gas remaining amount management system according to claim 1, wherein:
the indicator value calculator calculates as the indicator value a difference between an average value of the gas consumption in a past third predetermined period and an average value of the gas consumption in a past fourth predetermined period longer than the third predetermined period; and
the determiner determines as the reference period the fourth predetermined period including a largest amount of past data under a condition that the difference falls within a reference range as the threshold when a length of the fourth predetermined period is changed.

6. The gas remaining amount management system according to claim 1, wherein:
the indicator value calculator calculates as the indicator value a ratio of a slope of the gas remaining amount in a past sixth predetermined period longer than a past fifth predetermined period to a slope of the gas remaining amount in the fifth predetermined period; and
the determiner determines as the reference period the sixth predetermined period including a largest amount of past data under a condition that the ratio falls within a reference range as the threshold when a length of the sixth predetermined period is changed.
